# EUROPEAN PATENT APPLICATION

(11) **EP 4 517 330 A1**
(43) Date of publication of application: **05.03.2025**
(21) Application number: 24197392.4
(22) Date of filing: 29.08.2024
(51) Int. Cl.: G01N 35/04, B01L 3/00

(54) **LABORATORY CAPPER / DECAPPER**

(30) Priority: 01.09.2023 PL 44597923
(71) Applicant: Janiak, Tomasz, 61-710 Poznan (PL)
(72) Inventor: Janiak, Tomasz, 61-710 Poznan (PL)
(74) Representative: Gornicki, Pawel

(57) **Abstract**

The sample tube capper/decapper has a header in the top part that moves up or down, equipped with a set of spindles arranged in a row and terminated at the bottom with spigots to engage the spindles with the sample tube caps via a form-fitting coupling, a motor and a mechanism for drive transmission to the spindles as well as a mechanism for sliding the caps off the spigots, and in the bottom part, it contains a turntable integrated with the header that contains the storage rack with the sample tubes and a base for the caps. The sample tube capper/decapper features a header (1) with an interchangeable insert (3), connected to the header (1) via demountable form-fitting couplings, whereas the interchangeable insert (3) contains an assembly of components that must be changed when the device is changed over to cap/decap a different type of cap or a cap with a different torque or a different number of sample tubes on the storage rack.

## Description

The invention pertains to an automatic capper/decapper for laboratory sample tubes placed on a dedicated storage rack. The rack usually has several rows of receptacles for the sample tubes. The automatic capper/decapper caps or decaps laboratory sample tubes simultaneously in the entire row of sample tubes. The top part of the device has a header containing at least one row of vertical spindles, terminated at the bottom with spigots, and a drive system that also causes the spindles to rotate. The bottom part of the device has a turntable for the storage rack with the sample tubes and the base for the caps. The rows of sample tubes on the storage rack are parallel to each other and extend in the same direction as the row of spindles in the header. The turntable and the header can perform relative horizontal motion, enabling the alignment of the spindles of the header with the row of sample tubes the device is currently capping/decapping and the transfer of the caps removed from the sample tubes onto the base for the caps and from the base for the caps onto the storage rack with the sample tubes.

The device operates in a vertical top-down system, whereas the vertical movement is performed by the header of the device or the turntable. After lowering the header or raising the turntable, when the spigots of the header are located above the row of capped tubes, the spigots engage the cap via direct form-fitting coupling. The rotation of the pin engaged with the cap causes the cap to be unscrewed or screwed on the sample tube, depending on the direction of rotation. The shape of the spigot and the shape of the cap socket are selected in such a way that the cap is held on the spigot when it is moved from above the sample tube onto the base for the caps and from the base for the caps onto the sample tube. Caps removed from the sample tubes are placed in the base for the caps in the same order. This way, each sample tube can be capped with the corresponding cap during capping.

Caps for sample tube capping supplied by different manufacturers have different parameters, particularly the shape of the cap socket, which determines the shape of the spigot engaging the cap, the method of connecting the cap to the sample tube and the maximum capping torque. Also, sample tubes are made in different sizes, which means that the distances between the sample tubes on a standard storage rack also vary. Consequently, changing the type of sample tubes or caps requires a changeover of the header of the automatic capper/decapper.

The US patent US9796574B2 discloses an automated bit exchange method and apparatus for laboratory sample tube capping and decapping machines. In the solution according to US9796574B2, the interchangeable part is the bit of each capping/decapping component of the header. The device has a deck containing a nest designed to hold an SBS-formatted tube storage rack, a magazine for interchangeable sample tube capping/decapping bits, also SBS-formatted, and a header located above the platform and capable of moving up and down. The magazine for interchangeable sample tube capping/decapping bits, located on the deck at the location of the sample tube storage rack, enables the automatic change of the tips of the individual sample tube capping/decapping components. When replacing the row of adapter bits installed in a row of fittings on the header, the bits are off-loaded into one of the rows of bit receptacles in the magazine for interchangeable bits, and the newly selected set of adapter bits is loaded or mounted onto the fittings from the adjacent row of receptacles for interchangeable bits. The rows of bit receptacles contain labware-specific bit sets which can be loaded onto the magazine as the user wishes. However, to change the number of caps in the row, it is necessary to change the entire header. A user with several sizes of sample tubes must have several complete heads, which is expensive and requires plenty of storage space to keep the headers.

The aim of the invention is a device where the changeover of tooling to tooling suitable for a different type of caps, a different number of sample tubes on the storage rack or a different torque is easy and as quick as possible. The interchangeable components should have as few joints as possible, and the connection and separation of the interchangeable components should not require operator intervention or should be very easy to perform. The interchangeable components should be as small as possible so that they are easy to store. Also, the interchangeable components should consist of the smallest possible number of parts so that they are inexpensive and easy to manufacture.

The sample tube capper/decapper has a header in the top part that moves up or down, equipped with a set of spindles arranged in a row and terminated at the bottom with spigots to engage the spindles with the sample tube caps via a form-fitting coupling, a motor and a mechanism for drive transmission to the spindles as well as a mechanism for sliding the caps off the spigots, and in the bottom part, it contains a turntable integrated with the header that contains the storage rack with the sample tubes and a base for the caps. The rows of sample tubes on the storage rack are parallel to each other and extend in the same direction as the row of spindles in the header. The turntable and the header can perform relative horizontal motion, enabling the alignment of the spindles of the header with the row of sample tubes the device is currently capping/decapping and the transfer of the caps removed from the sample tubes onto the base for the caps and from the base for the caps onto the storage rack with the sample tubes. The device features a header with an interchangeable insert, forming an integrated assembly of components that must be replaced before starting operation with another cap type or with a cap with a different torque, or a different number of sample tubes on the storage rack, located in the socket of the header and connected to the header via a demountable form-fitting coupling. The interchangeable insert contains spindles arranged in a row, provided with spigots at the bottom whose shape matches the sockets in the caps of a specific type of sample tubes and intended to engage the spindle with the cap via a form-fitting coupling. The bodies of the row of spindles include at least one horizontal rectangular bar, whereas the side of the bar, extending along the row of spindles, on the side facing the door in the header, has mating surfaces - the main mating surface of the interchangeable insert along the row of spindles and auxiliary mating surfaces of the interchangeable insert on both sides of the main mating surface, set back towards the middle of the interchangeable insert, whereas the sides of the bar, perpendicular to the spindle row, on both sides of the spindle row, have shaped notches whose shape corresponds to the shaped notches in the structural parts of the header socket receiving the interchangeable insert, whereas the shaped notches form a secure and stable form-fitting coupling of the header of the device with the interchangeable insert. The header of the device has two spindles fitted with gears - the driving gear and the guide gear, coupled with a toothed belt, whereas the driving gear is engaged with the drive system of the motor via the toothed belt of the motor. The spindles and gears are parts of the mechanism of drive transmission to the spindles of the interchangeable insert. Also, the header contains a mechanism to slide off the caps from the spigots of the spindles of the interchangeable insert, which are a horizontal plate embracing the spindles of the interchangeable insert, attached to the structural parts of the header and capable of moving up and down.

When the insert is inserted into the header, the form-fitting coupling created by the shaped notches in the sides of the bar of the interchangeable insert and the shaped notches in the structural parts of the socket in the header of the device positions the insert, and the mating surfaces ensure a secure connection between the parts of the mechanism for the transmission of the drive from the spindles of the header to the spindles of the interchangeable insert.

Advantageously, the bodies of the row of spindles include two rectangular horizontal bars, parallel to each other.

Advantageously, the door of the header of the device is locked with a spring latch.

Advantageously, holes in the plate of the mechanism sliding the caps off are open on the side facing the interchangeable insert, which enables the replacement of the interchangeable insert without dismantling the plate sliding the caps off.

Advantageously, the mechanism for the transmission of the drive from the spindles of the header to the spindles of the interchangeable insert contains cranks of the header, fitted on the spindles of the header, which are connected together by a cross-bar, and cranks in the interchangeable insert, fitted at the top of the spindles of the insert, on which a rectangular cross-bar is fitted to connect the cranks of the insert, at the height of the cross-bar connecting the header cranks, whereas the side of the interchangeable insert bar, extending along the row of spindles with cranks, is fitted on the side facing the inside of the header with two pins and a mating surface, while the corresponding side of the bar connecting the cranks of the header has a mating surface matching the mating surface of the cross-bar of the interchangeable insert and two sockets receiving the pins located on the side of the cross-bar connecting the cranks of the interchangeable insert, whereas the sockets contain magnets.

Advantageously, on the cross-bar connecting the cranks of the header cranks, there is a release lever, making it easier to overcome the force of attraction of the magnets and disengage the interchangeable insert from the device header.

Advantageously, the mechanism for drive transmission from the header gears - the driving gear and the guide gear - to the spindle of the interchangeable inserts contains a row of modular driven gears fixed at the top of the spindles of the interchangeable insert, forming gear transmission systems with the row of modular driving gears fitted in the header, whereas each of the modular driving gears is fixed on a common axis with a driven gear, whereas the driven gears are connected by a toothed belt to the drive wheel and the guide wheel of the header.

Advantageously, on the structural side parts of the socket of the header receiving the interchangeable insert, there is at least one rotating locking lever, integrated with the auxiliary mating surface of the interchangeable insert, preventing the interchangeable insert from sliding out of the header socket.

Advantageously, the closed door of the header adheres to the main mating surface of the interchangeable insert, preventing the interchangeable insert from sliding out of the header socket.

The interchangeable insert does not have a drive, monitoring components or controls, it is easy to fit into the device header and easy to disconnect. The interchangeable insert has small dimensions and weight, it is easy and cheap to manufacture and easy to store. It can be kept in a storage space inside the device. The system for transmission of the drive to the spindles of the insert is engaged automatically when the interchangeable insert is inserted into the socket of the header of the device. Disengaging is easy and does not require using much force.

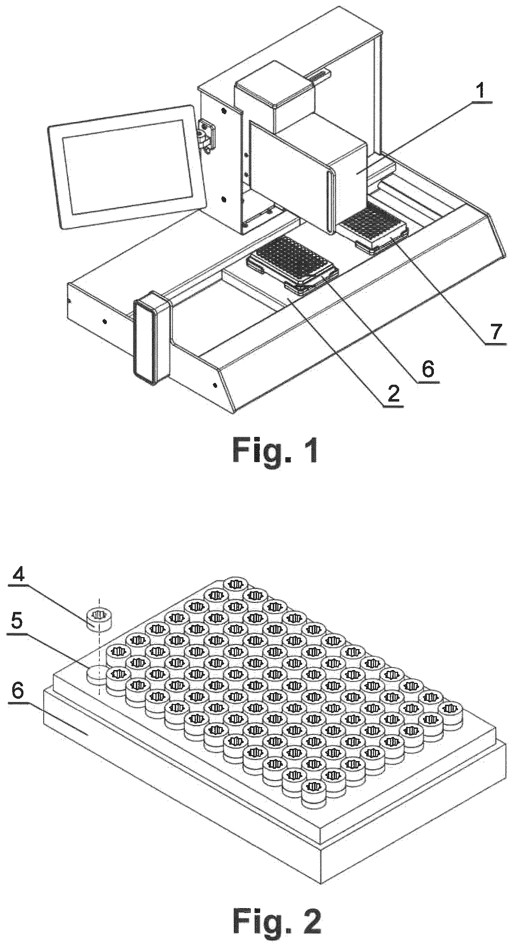

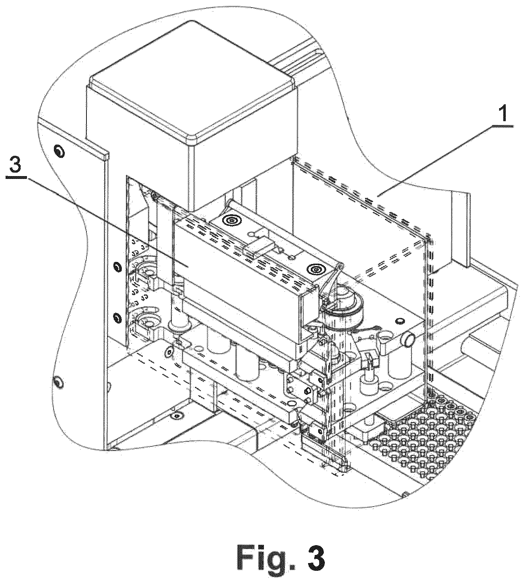

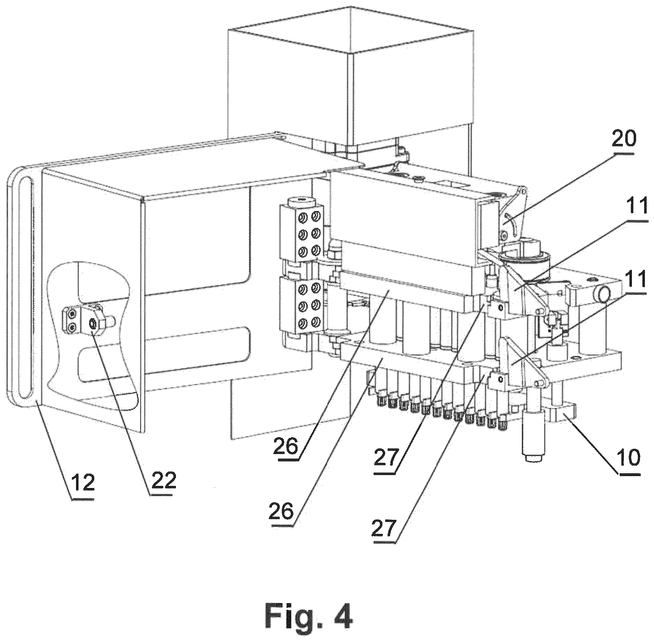

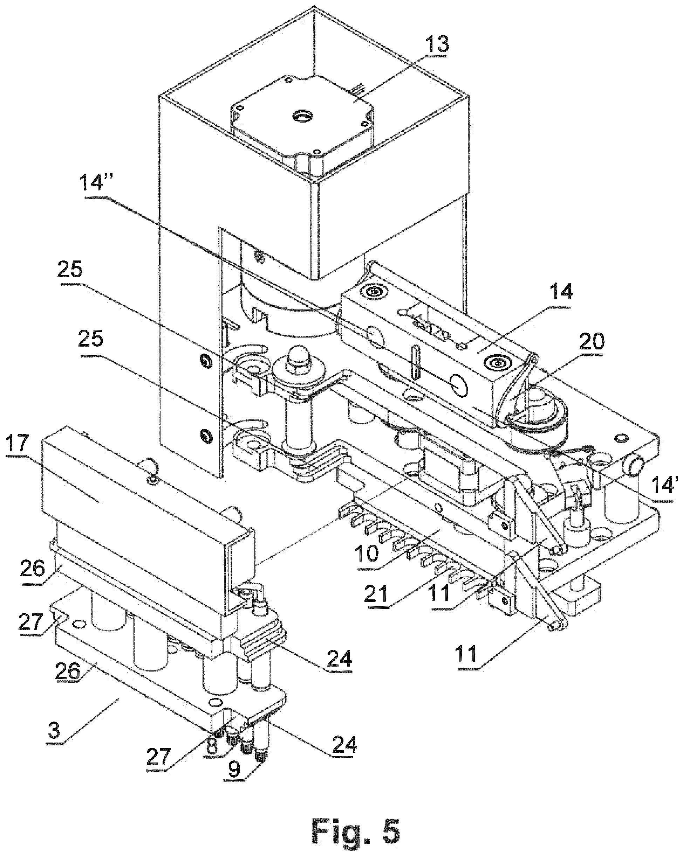

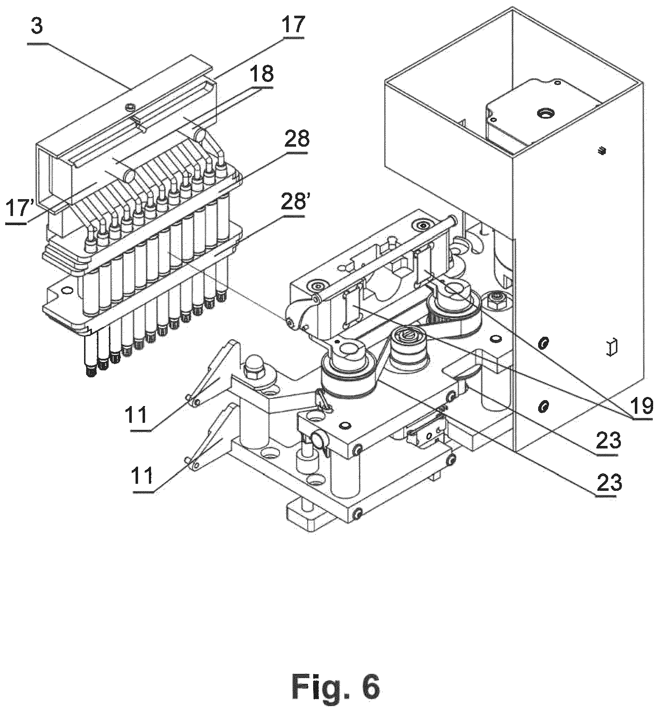

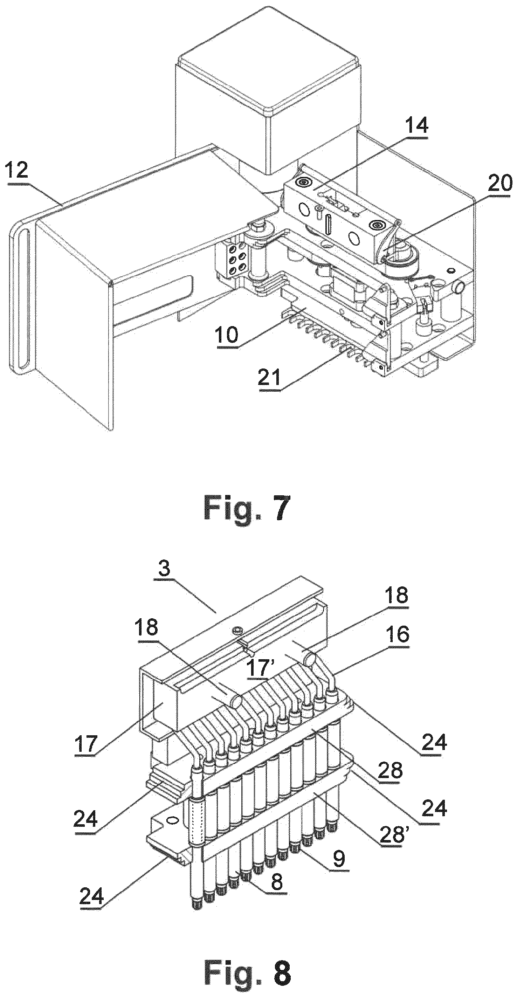

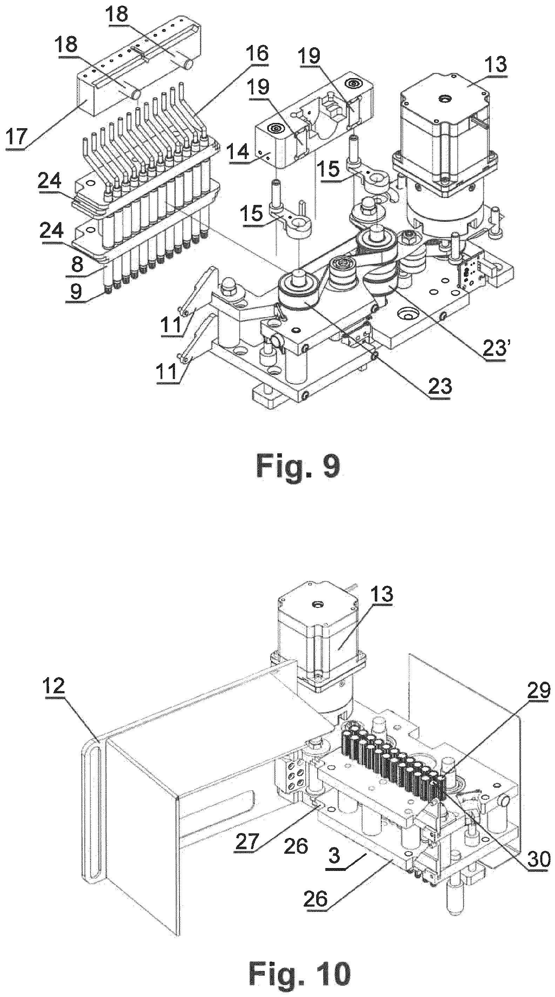

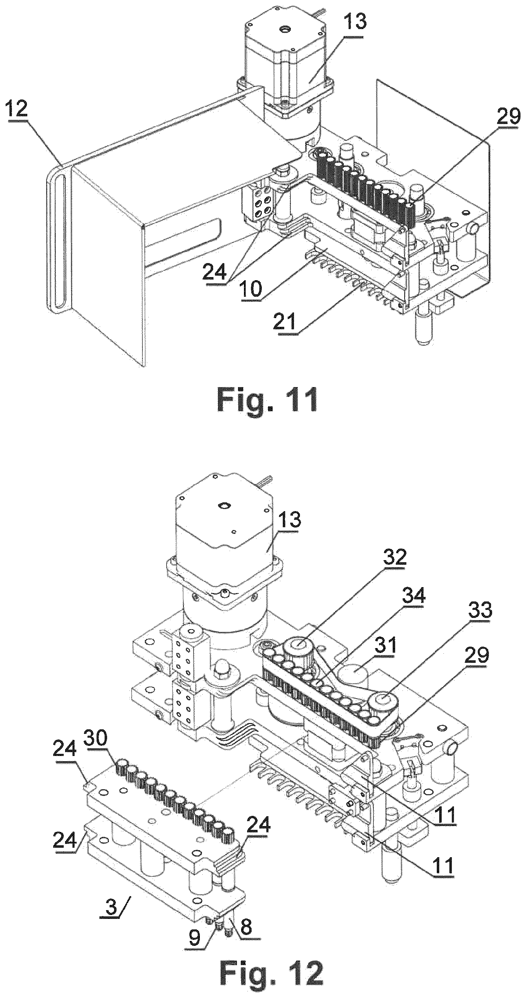

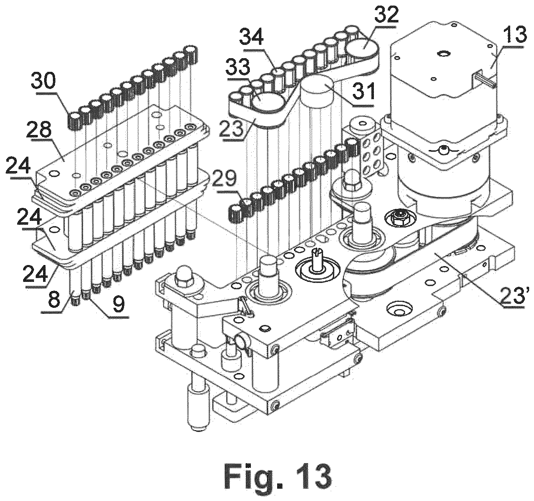

The object of the invention is explained in detail based on the drawing where fig. 1 shows the general view of the capper/decapper for sample tubes, fig. 2 shows the storage rack with capped sample tubes, where one sample tube and corresponding cap are shown in an exploded view, fig. 3 shows the perspective view of a header with a fitted and locked insert, fig. 4 shows a perspective view of a header with a fitted and unlocked insert, fig. 5 shows a perspective view of a header with a withdrawn insert from the front, fig. 6 shows a perspective view of a header with a withdrawn insert from the back, fig. 7 shows a perspective view of a header without the insert, fig. 8 shows a perspective view of the insert, fig. 9 shows an exploded perspective view of the insert and header showing the drive system, and figs. 10 to 13 show views of the interchangeable insert and header of the device where the drive is transmitted from the motor to the spindles of the interchangeable insert via a gear transmission system, whereas fig. 10 shows a view of the inside of the header of the device with the interchangeable insert, fig. 11 shows a view of the inside of the header of the device without the interchangeable insert, fig. 12 shows a view of the inside of the header and an interchangeable insert moved away from the header, and fig. 13 shows an exploded perspective view of the insert and the header revealing the drive system.

At the top, the sample tube capper/decapper has the header **1** for the automatic capping/decapping with the cap **4** of the sample tubes **5** placed on the storage rack **6,** moving up and down, fitted with spindles **8** arranged in a row and terminated at the bottom with spigots **9** to engage the spindles **8** with the caps **4** of the sample tubes **5** via a form-fitting coupling, whereas the header **1** is integrated with a turntable **2** located at the bottom of the device. On the turntable **2,** there is a storage rack **6** with the sample tubes **5** and the base **7** for the caps **4.** The rows of sample tubes **5** on the storage rack **6** are parallel to each other and extend in the same direction as the row of spindles **8** in the header **1.** The turntable **2** and the header **1** can perform relative horizontal motion, enabling the alignment of the row of spindles **8** of the header **1** with the sample tubes **5** in a row the device is currently capping/decapping and the transfer of the caps 4 removed from the sample tubes **5** onto the base for the caps **7** and from the base for the caps **7** onto the storage rack **6** with the sample tubes **5.** In the device according to the invention, the header **1** has an interchangeable insert **3,** forming an integrated assembly of components that must be replaced during the changeover of the device for operation with another cap type or with a cap with a different torque or a different number of sample tubes arranged on the storage rack. The interchangeable insert **3** is located in the socket of the head **1,** and it is connected to the head **1** with a separable connection, using form-fitting couplings formed by shaped notches **24** and **25.** The interchangeable insert **3** contains spindles **8** arranged in a row, provided with spigots **9** at the bottom whose shape matches the sockets in the caps **4** of a specific type of sample tubes and intended to engage the spindle **8** with the cap **4** via a form-fitting coupling. The bodies of the row of spindles **8** include two horizontal rectangular bars **28** parallel to each other. The sides of the bars, parallel to the row of spindles **8,** on the side facing the door **12** of the header **1** are provided with mating surfaces - the main mating surface **26,** extending along the row of spindles **8,** and auxiliary mating surfaces **27** on both sides of the main mating surface **26,** set back towards the middle of the interchangeable insert **3** relative to the main mating surface **26.** The sides of the bars **28,** rectangular to the row of spindles, have shaped notches **24** on both sides of the row of spindles **8.** The shape of the shaped notches **24** corresponds to the shape of shaped notches **25** in the structural parts of the header socket **1** receiving the interchangeable insert **3.** The shaped notches **24** and **25** ensure a secure and stable form-fitting coupling of the header **1** of the device with the interchangeable insert **3.** The interchangeable insert **3** is prevented from sliding out of the socket of the header **1** by rotating locking levers **11** integrated with the auxiliary mating surfaces **27** of the interchangeable insert **3** and, by closing the door **12** of the header **1,** integrated with the main mating surfaces **26** of the interchangeable insert **3,** whereas the door **12** of the header **1** of the device is also locked with a latch**22**, in the described embodiment, using a spring latch.

The header **1** also has two spindles with fixed gears - the driving gear **32** and the guide gear **33,** coupled by a toothed belt **23** and integrated with the tension gear **31,** whereas the driving gear **32** is engaged with the drive system of the motor **13** via the toothed belt **23'** of the motor **13.** The spindles of the driving gear **32** and the guide gear **33** of the header **1** are fitted with cranks of the header **15,** connected at the top with a cross-bar **14,** mating with the cross-bar **17** of the interchangeable insert **3.** The cross-bar 17 of the interchangeable insert **3** located at the height of the cross-bar of the header **14,** connects the cranks **16** of the interchangeable insert **3,** fitted at the top of the spindles **8** of the insert **3.** The side of the cross-bar **17** of the interchangeable insert **3,** extending along the row of spindles **8** with cranks **16,** is fitted on the side facing the header **1** with two pins **18** and a mating surface **17'** while the corresponding side of the cross-bar **14** connecting the cranks **15** of the header **1** has a mating surface **14'** matching the mating surface **17'** of the cross-bar **17** of the interchangeable insert **3** and two sockets receiving the pins **18** located on the side of the cross-bar **17** connecting the cranks **16** of the interchangeable insert **3,** whereas the sockets contain magnets **19.** When the interchangeable insert **3** is inserted into the socket of the header **1,** the cross-bar **14** of the header **1** engages the cross-bar **17** of the interchangeable insert **3.** The form-fitting couplings formed by the shaped notches **24** of the insert **3** and the shaped notches **25** of the socket of the header **1** position the insert **3,** and the pins **18,** magnets **19** and mating surfaces **14' and 17'** connect the cross-bar **17** of the cranks **16** of the spindles **8** of the interchangeable insert **3** and the cross-bar **14** of the cranks **15** of the header **1.** On the cross-bar **14** connecting the cranks **15** of the header **1,** there is a release lever **20,** making it easier to overcome the force of attraction of the magnets **19** and disengage the interchangeable insert **3** from the header 1 of the device. The motor **13** with the encoder located in the header **1** drives the first spindle of the header, the driving gear **32** fitted on the spindle and the first crank **15** of the header **1** via the toothed belt **23',** while the toothed belt **23** drives the guide gear **33,** and the second spindle of the header and the second crank **15** of the header **1.** The rotational motion of the cranks **15** of the header **1** generates the linear motion of the cross-bar **14** of the header **1** and the connected cross-bar **17** of the insert **3,** whereas the cross-bar **17** generates the rotational motion of the spindles **8** with the pins **9** of the interchangeable insert **3.** The rotational motion of the spindles **8** with the spigots **9** engaged with the caps **4** causes the capping or decapping of the caps **4** of the sample tubes **5.**

To remove the interchangeable insert **3** from the header **1,** it is necessary to open the door **12,** rotate the locking levers **11** about their axis, overcome the force of attraction of the magnets **19** and, using the release lever **20,** slide the insert out along the guides of the form-fitting couplings **24, 25.** To install another interchangeable insert **3,** it is necessary to slide it in along the shaped notches **24** and **25,** turn the locking levers **11** into the locked position and close the door **12** of the header **1.** After the interchangeable insert **3** is slid into the socket of the header **1,** the interchangeable insert **3** is automatically coupled with the header **1.**

The header **1** also has a mechanism to slide the caps **4** off the spigots **9** of the spindles **8** of the interchangeable insert **3.** The mechanism also contains a horizontal plate **10** with holes **21** embracing the spindles **8** of the interchangeable insert **3,** attached to the structural parts of the header **1** and capable of moving up and down. Holes **21** in the plate **10** of the mechanism sliding the caps **4** off are open on the side facing the interchangeable insert **3,** which enables the replacement of the interchangeable insert **3** without dismantling the plate **10** sliding the caps off.

In another embodiment of the capper/decapper for sample tubes, the drive is transmitted from the gears of the header **1** - the driving gear **32** and the guide gear **33** - to the spindles **8** of the interchangeable insert **3** via gears. At the top of the spindles **8** of the interchangeable insert **3,** there are fixed modular driven gears **30,** forming a gear transmission system with a row of modular driving gears **29** fitted in the header **1.** The modular driving gears **29** are fixed on a common axis with driven gears **34,** whereas the driven gears **34** are connected via the toothed belt **23** to the gears of the header **1 -** via the driving gear **32,** tension gear **31** and guide gear **33.**

The device according to the invention facilitates work in laboratories using different sample tube systems. The device can be easily and quickly changed over to cap/decap other types of sample tubes.

### List of symbols:

- 1.: header
- 2.: turntable
- 3.: interchangeable insert
- 4.: cap
- 5.: sample tube
- 6.: storage rack for sample tubes
- 7.: base for caps
- 8.: spindles of the insert
- 9.: spigots
- 10.: plate of the mechanism sliding the caps off
- 11.: rotating locking levers
- 12.: header door
- 13.: header motor
- 14.: cross-bar of the header
- 14': mating surface of the cross-bar of the header
- 14": sockets in the cross-bar of the header
- 15.: cranks of the header
- 16.: cranks of the spindles of the insert
- 17.: cross-bar of the insert
- 17': mating surface of the cross-bar of the insert
- 18.: pins on the cross-bar of the insert
- 19.: magnets in the sockets of the cross-bar of the header
- 20.: rotating release lever
- 21.: holes in the plate of the mechanism sliding the caps off
- 22.: latch of the header door
- 23.: toothed belt
- 23': toothed belt of the motor shaped notches of the insert
- 24.: shaped notches of the insert
- 25.: shaped notches in the socket of the head
- 26.: main mating surface of the insert
- 27.: auxiliary mating surface of the insert
- 28.: horizontal bar of the interchangeable insert, embracing the bodies of the spindles
- 29.: modular driving gears of the header
- 30.: modular driven gears of the interchangeable insert
- 31.: tension gear
- 32.: driving gear
- 33.: guide gear
- 34.: driven gear of the header

## Claims

1. The sample tube capper/decapper has a header in the top part that moves up or down, equipped with a set of spindles arranged in a row and terminated at the bottom with spigots to engage the spindles with the sample tube caps via a form-fitting coupling, a motor and a mechanism for drive transmission to the spindles as well as a mechanism for sliding the caps off the spigots, and in the bottom part, it contains a turntable integrated with the header that contains the storage rack with the sample tubes and a base for the caps, whereas the rows of sample tubes on the storage rack are parallel to each other and extend in the same direction as the row of spindles in the header, and the turntable and header can perform relative horizontal movement, enabling the alignment of the spindles of the header with the row of sample tubes capped/decapped by the device and transfer of the caps removed from the sample tubes onto the base for caps and from the base for caps onto the storage rack with the sample tubes, **characterised in that** the header (1) of the device contains an interchangeable insert (3) containing an integrated assembly of components that must be replaced before starting to cap/decap other types of caps or a cap with another torque or with a different number of sample tubes on the storage rack, located in the socket of the header (1) and connected to the header (1) using a demountable connection via form-fitting couplings, whereas the interchangeable insert (3) contains spindles (8) arranged in a row, fitted at the bottom with (9) spigots whose shape matches the sockets in the caps (4) of a specific type of sample tubes (5), intended for the coupling of the spindle (8) with the cap (4) via a form-fitting coupling, whereas the bodies of the row of spindles (8) are contained in at least one horizontal rectangular bar (28), and the side of the bar (28) extending along the row of the spindles (8), on the side facing the door (12) of the header (1) has mating surfaces - the main mating surface (26) of the interchangeable insert (3) along the row of the spindles (8) and auxiliary mating surfaces (27) of the interchangeable insert (3) on both sides of the main mating surface (26), set back towards the middle of the interchangeable insert (3), whereas the sides of the bar (28), perpendicular to the row of spindles (8), on both sides of the row of spindles (8) have shaped notches (24), whose shape corresponds to the shaped notches (25) in the structural parts of the socket of the header (1), receiving the interchangeable insert (3), whereas the shaped notches (24 and 25) form form-fitting couplings of the header (1) with the interchangeable insert (3), and the header (1) of the device also has two spindles fitted with gears - the driving gear (32) and the guide gear (33) - connected with a toothed belt (23), whereas the driving gear (32) is connected to the drive system of the motor (13) via the toothed belt of the motor (23'), and the spindles and gears (32, 33) are parts of the mechanism for the transmission of the drive to the spindles (8) of the interchangeable insert (3), and the header (1) contains the mechanism sliding the cap (4) off the spigots (9) of the spindles (8) of the interchangeable insert (3), which consists of a horizontal plate (10) embracing the spindles (8) of the interchangeable insert (3), fitted to the structural parts of the header (1) and capable of moving up and down.

2. Device according to claim 1, **characterised in that** the bodies of the row of spindles (8) include two rectangular horizontal bars (28), parallel to each other.

3. Device according to claim 1, **characterised in that** the door (12) of the header (1) is locked with a spring latch.

4. Device according to claim 1, **characterised in that** the holes (21) in the plate (10) of the mechanism sliding the caps (4) off are open on the side facing the interchangeable insert (3).

5. Device according to claim 1, **characterised in that** the mechanism for the transmission of the drive from the spindles of the header (1) to the spindles (8) of the interchangeable insert (3) contains cranks (15), fitted on the spindles of the header (1), whereas the cranks (15) are connected together by a cross-bar (14), and cranks (16) in the interchangeable insert (3), fitted at the top of the spindles (8) of the interchangeable insert (3), on which a rectangular cross-bar (17) is fitted to connect the cranks (16) of the interchangeable insert (3), at the height of the cross-bar (14) connecting the cranks of the header (15), whereas the side of the cross-bar (17) of the interchangeable insert (3), extending along the row of spindles (8) with cranks (16), is fitted on the side facing the header (1) with two pins (18) and a mating surface (17') while the corresponding side of the cross-bar (14) connecting the cranks (15) of the header (1) has a mating surface (14') matching the mating surface (17') of the cross-bar (17) of the interchangeable insert (3) and two sockets receiving the pins (18) located on the side of the cross-bar (17) connecting the cranks (16) of the interchangeable insert (3), whereas the sockets contain magnets (19).

6. Device according to claim 5, **characterised in that**, on the cross-bar (14) connecting the cranks (15) of the header (1), there is a release lever (20).

7. Device according to claim 1, **characterised in that** the mechanism for drive transmission from the gears of the header (1) - the driving gear (32) and the guide gear (33) - to the spindles (8) of the interchangeable insert (3) contains a row of modular driven gears (30) fixed at the top of the spindles (8) of the interchangeable insert (3), forming gear transmission systems with the row of modular driving gears (29) fitted in the header (1), whereas each of the modular driving gears (29) is fixed on a common axis with a driven gear (34), whereas the driven gears (34) are connected by a toothed belt (23) to the drive wheel (32) and the guide wheel (33) of the header (1).

8. Device according to claims 5 and 7, **characterised in that**, on the side structural parts of the socket of the head (1) receiving the interchangeable insert (3), there is at least one rotating locking lever (11), integrated with the auxiliary mating surface (27) of the interchangeable insert (3).

9. Device according to claims 5 and 7, **characterised in that** the closed door (12) of the header (1) adheres to the main mating surface (26) of the interchangeable insert (3).
